# EUROPÄISCHE PATENTSCHRIFT

(11) **EP 3 492 513 B1**
(45) Veröffentlichungstag und Bekanntmachung des Hinweises auf die Patenterteilung: **03.11.2021**
(21) Anmeldenummer: 17204277.2
(22) Anmeldetag: 29.11.2017
(51) Int. Cl.: C08G 77/06, C08G 77/46

(54) **VERFAHREN ZUR HERSTELLUNG VON IM SILOXANTEIL VERZWEIGTEN SIOC-VERKNÜPFTEN POLYETHERSILOXANEN**
METHOD OF MANUFACTURING SIOC LINKED POLYETHER BRANCHED IN SILOXANE SECTION
PROCÉDÉ DE FABRICATION DE POLYÉTHERSILOXANES LIÉS AU SIOC RAMIFIÉS DANS LA PARTIE SILOXANE

(43) Veröffentlichungstag der Anmeldung: 05.06.2019
(73) Patentinhaber: Evonik Operations GmbH, 45128 Essen (DE)
(72) Erfinder: KNOTT, Wilfried, 45355 Essen (DE); DUDZIK, Horst, 45326 Essen (DE)
(74) Vertreter: Evonik Patent Association

(56) Entgegenhaltungen:
- EP-A1- 0 884 345
- EP-A1- 2 628 771
- WO-A1-2009/065644
- WO-A1-2016/005157
- DE-A1-102005 004 676
- DE-B- 1 039 516

## Beschreibung

Der Erfindung betrifft ein Verfahren zur Herstellung von im Siloxanteil verzweigten SiOC-verknüpften Polyethersiloxanen. Weiter betrifft die Erfindung auch Zubereitungen bestehend aus einem SiOC-verknüpften verzweigten Siliconpolyether nebst einem Polyetherol und einem durch Acetylgruppen endverschlossenen Polyetherol. Ferner betrifft die Erfindung die Verwendung dieser im Siloxanteil verzweigten SiOC-verknüpften Polyethersiloxane als Entschäumer, als Schaumstabilisatoren, Netzmittel, Lack- und Verlaufsadditive sowie als Dismulgatoren.

Als Referenz zu der im Rahmen dieser Schrift verwendeten M-, D-, T-, Q-Nomenklatur zur Beschreibung der Baueinheiten von Organopolysiloxanen sei W. Noll, Chemie und Technologie der Silicone, Verlag Chemie GmbH, Weinheim (1960), Seite 2 ff. angeführt.

Ältere Verfahren zur Herstellung von verzweigten SiOC-verknüpften Polyethersiloxanen beruhen im Wesentlichen auf der Chlorsilanchemie (Methyltrichlorsilan und Dimethyldichlorsilan) und sehen die Anbindung der Polyethersubstituenten durch die Umsetzung der SiCl-Gruppen tragenden Siloxane mit dem jeweiligen Polyetherol in Gegenwart geeigneter Hilfsbasen vor, um die bei der Verknüpfungsreaktion freiwerdende Salzsäure in Form von Salzen zu binden. Sind die direkt der Müller-Rochow-Synthese (Direktsynthese) entstammenden, einfachen Chlorsilane auch günstig, so werfen die Lagerung und Handhabung dieser ätzend-korrosiven Edukte im Produktionsmaßstab etliche Probleme auf wie zum Beispiel Fragen nach Materialbeständigkeiten, Abgas-, Abfallthematiken, etc., was derartige Alt-Prozesse aus heutiger Sicht zunehmend unattraktiv macht.

Die EP3401353 A1 und EP3321304 A1 zielen auf Mischungen zyklischer-verzweigter Siloxane vom D/T-Typ ab und lehren deren Weiterverarbeitung zu funktionalisierten verzweigten Siloxanen und/ oder verzweigten Siliconölen. Die darin offenbarte Weiterverarbeitung erfolgt durch saure Äquilibrierung der D/T-strukturierten Siloxane mit Silanen und/oder Siloxanen.

Hiernach sind im Siloxanteil verzweigte SiOC-verknüpfte Polyethersiloxane beispielsweise so zugänglich, indem man Mischungen zyklischer-verzweigter Siloxane vom D/T-Typ mit Diethoxydimethylsilan äquilibriert und dann im Sinne einer Umesterung zum Beispiel den metallkatalysierten Austausch der Ethoxy-Substituenten durch Polyalkylenoxy-Reste vornimmt.

Allerdings ist Diethoxydimethylsilan ein kostspieliges Modifizierungsagenz, was dessen breiten Einsatz einschränkt.

Konkret besteht somit die zu lösende technische Aufgabe darin, ein einfaches und zugleich wirtschaftliches Verfahren zu finden, das die Herstellung von im Siloxanteil verzweigten SiOC-verknüpften Polyethersiloxanen gestattet.

Zudem sollen dem Nachhaltigkeitsaspekt geschuldet bei der erfindungsgemäß zu lösenden Syntheseaufgabe Edukte wie Chlorsilane/ Chlorsiloxane sowie Zwischenprodukte wie die mineralsauren Alkylhalogenosiloxane, zum Beispiel die altbekannten Chlorsiloxanylsulfate, bewusst vermieden werden.

Außerdem sollten die im Siloxanteil verzweigten SiOC-verknüpften Polyethersiloxane über eine gute anwendungstechnische Qualität verfügen.

An ihren Dialkylsiloxy-Termini Acyloxy- respektive Acetoxygruppen tragende, verzweigte und unverzweigte Siloxane sind bereits aus der US 3595885 bekannt, worin deren Herstellung ausgehend von terminal mit Halogen-substituierten Siloxanen durch Umsetzung mit ein- und/ oder mehrbasigen Carbonsäuren, den Salzen entsprechender Carbonsäuren oder den Anhydriden solcher Carbonsäuren beschrieben wird. Insbesondere führt der Einsatz von Carbonsäuren und deren Anhydriden bei den dort betrachteten, äquilibrierten Systeme stets zur Präsenz der in die Siloxangerüste eingebauten Schwefelsäure in Form verbrückender Sulfatogruppen, was sich aus der bevorzugten Verwendung der dort als Edukt eingesetzten Chlorsiloxanylsulfate erklärt. Wie dem Fachmann bekannt, sind sulfatoverbrückte Siloxane allerdings reaktive Spezies die zum Beispiel bei ihrer Lagerung und abhängig von Temperatur und eventuell ins System gelangender Feuchtigkeit unter Freisetzung von Schwefelsäure unerwünschte Folgereaktionen eingehen können.

Ebenfalls ist aus etlichen Publikationen und Schutzrechtsersuchen die nicht äquilibrierende Öffnung einfacher unverzweigter Siloxanzyklen mit Acetanhydrid zu kurzkettigen, kettenterminale Acetoxygruppen tragenden Siloxanen in Gegenwart von Katalysatoren bekannt.

So beschreiben Borisov und Sviridova die Öffnung zyklischer Dimethylsiloxane mit Acetanhydrid in Gegenwart katalytischer Mengen Eisen(III)chlorid zu kurzkettigen α,ω-Acetoxysitoxanen (S. N. Borisov, N. G.Sviridova, J. Organomet. Chem. 11 (1968), 27-33). Lewis et al. widmet sich in der US 4066680 der Herstellung kurzkettiger α,ω-Sitoxandiote, wobei er Octamethylcyclotetrasiloxan mit Acetanhydrid an säurebehandelten Bleicherden umsetzt und die so erhaltenen Mischungen kurzkettiger α,ω-Acetoxysiloxane in alkalisch eingestelltem Wasser hydrolysiert.

Aus US 3346610 ist gleichfalls ist ein Zugang zu Acetoxygruppen tragenden, kurzkettigen Siloxanen bekannt, der auf der Metallhalogenid induzierten Acetoxy-Modifizierung gespannter cyclischer Siloxane beruht, indem man diese mit Acetoxygruppen enthaltenden Silikonverbindungen zur Umsetzung bringt. Eine Vielzahl Friedel-Crafts-aktiver Metallhalogenide fungiert hier als Katalysator, wobei Zinkchlorid als bevorzugt ausgelobt wird. Eine spezielle Zielsetzung der US 3346610 liegt in der Acetoxy-Modifizierung gespannter Diorganosiloxancyclen unter bewusster Vermeidung von Äquilibriervorgängen.

Der Stand der Technik bezieht sich somit auf Arbeiten, die die Öffnung cyclischer Siloxane - hierbei manchmal gespannter Cyclosiloxane - mit Acyloxygruppen enthaltenden Reaktanden vorsehen und deren Zielsetzung es ist, definierte lineare kurzkettige und das auf dem Wege der fraktionierten Destillation noch zu separierende Siloxanspezies zu gewinnen.

Jedoch sind die auf diesem Wege synthetisierten, Molmassen-definierten, kettenreinen Acetoxy-modifizierten Siloxanverbindungen nicht geeignet für die Herstellung von organomodifizierten Siloxanen insbesondere Polyethersiloxanen, die Eingang in anspruchsvolle technische Anwendungen wie z.B. in die PU-Schaumstabilisierung oder in die Entschäumung von Kraftstoffen, etc. nehmen. Wirkstoffe, die ein derartiges Anwendungsgebiet effektiv adressieren, sind stets von einer breiten Oligomerverteilung umfassend hohe, mittlere und niedrige Molmassen gekennzeichnet, da den darin enthaltenen Oligomeren in Abhängigkeit von ihrer Molmasse und damit ihres Diffusionsverhaltens sehr oft differenzierte tensidische Aufgaben in unterschiedlichen Zeitfenstern des jeweiligen Prozesses zuzuschreiben sind. Speziell im Falle der verzweigten organomodifizierten Siloxane sind dem eingangs diskutierten Reaktivitätsverhalten von M-, D- und T-Einheiten geschuldet eine gute Oligomerverteilung kombiniert mit einer möglichst statistischen Gleichverteilung von Siloxaneinheiten in den individuellen Molekülen jedoch nur dann zu erzielen, wenn das eingesetzte Startmaterial vom D/T-Typ bereits selbst einer Verteilungsfunktion genügt. Acyloxyorganopolysiloxane und hierbei insbesondere Organosiloxane mit endständigen Acyloxygruppen sind als Ausgangsmaterialien für Folgereaktionen bekannt. So können beispielsweise die Acyloxygruppen in einem Diorganosiloxan hydrolysiert werden, worauf das Hydrolysat dehydratisiert und das dehydratisierte Hydrolysat unter Bildung von fließfähigem Diorganopolysiloxan polymerisiert werden kann. Diese fließfähigen Polysiloxane eignen sich als Ausgangsmaterialien für die Herstellung viskoser Öle und Kautschuke, die zu Silikonelastomeren gehärtet werden können.

Mit endständigen Acyloxygruppen versehene Organosiloxane können beispielsweise durch Umsetzung eines Alkylsiloxans und einer organischen Säure und/oder deren Anhydrid in Gegenwart von Schwefelsäure als Katalysator erhalten werden. Ein solches Verfahren ist in der US-Patentschrift 2910496 (Bailey et al.) beschrieben. Obwohl man nach diesem Verfahren prinzipiell auch Organosiloxane mit endständigen Acyloxygruppen erhält, so haftet dem Prozess der Nachteil an, dass das Reaktionsprodukt aus einer Mischung von acyloxyhaltigen Siloxanen und Acyloxygruppen tragenden Silanen unterschiedlicher Zusammensetzung besteht. Insbesondere führt die Lehre hierzu aus, dass aus M-, D- und T-Einheiten zusammengesetzte Alkylsiloxancopolymere durch das Verfahren in Trimethylacyloxysilan, Di-Acyloxydimethylsiloxan und Methyltriacyloxysilan gespalten werden. Somit erhält Bailey bei der Umsetzung von Octamethylcyclotetrasiloxan mit Essigsäureanhydrid und Essigsäure nach Neutralisation der als Katalysator eingesetzten Schwefelsäure, Abtrennen der Salze und Abziehen von Wasser, restlicher Essigsäure und Acetanhydrids ein komplexes Stoffgemisch und keinesfalls ein Äquilibrat, das er dann der fraktionierten Destillation unterwirft (siehe Beispiel, ibid.). Die stoffliche Identität der dabei erhaltenen Fraktionen II und IV bleibt unklar, so dass es hiernach schwierig ist, definierte Produkte zu erhalten, beziehungsweise diese in hohen Ausbeuten vom Gemisch abzutrennen.

Sich auf Bailey et al. (US 2910496) beziehend, lehrt die DE 1545110 (A1) (Omietanski et al.) ein Verfahren, bei dem eine Acyloxygruppe eines Acyloxysiloxans mit der Hydroxylgruppe eines Polyoxyalkylenhydroxypolymers unter Bildung eines Siloxan-oxyalkylen-Blockmischpolymers und einer Carbonsäure umgesetzt wird, wobei die Carbonsäure aus dem Reaktionsgemisch entfernt wird. Die dort beschriebenen, lösemittelfrei geführten Umsetzungen verlangen zum Teil beträchtliche Reaktionszeiten (bis zu 11,5 Stunden (Beispiel 1), sehr hohe Umsetzungstemperaturen (150 bis 160°C (Beispiel 1) und das Anlegen eines Hilfsvakuums beziehungsweise das Strippen der Reaktionsmatrix mit trockenem Stickstoff über die gesamte Reaktionsdauer.

WO200965644 offenbart ein Verfahren zur Herstellung verzweigter SiH-funktioneller Polysiloxane und deren Verwendung zur Herstellung SiC- und SiOC- verknüpfter, verzweigter organomodifizierter Polysiloxane. Uberraschenderweise wurde nun gefunden, das man im Siloxanteil verzweigte SiOC-verknüpfte Polyethersiloxane ausgehend von zyklischen-verzweigten Siloxanen vom D/T-Typ herstellen kann, indem man
in einem ersten Schritt zyklische-verzweigte Siloxane vom D/T-Typ säurekatalysiert mit Acetanhydrid gegebenenfalls in Abmischung mit einfachen Siloxanzyklen zu Acetoxygruppen-tragenden, verzweigten Siloxanen umsetzt und
in einem zweiten Schritt die Äquilibrierung des Acetoxy-modifizierten verzweigten Siloxans mit Trifluormethansulfonsäure durchführt und
in einem dritten Schritt das trifluormethansulfonsaure Acetoxysiloxan mit Polyetherolen gegebenenfalls in Gegenwart von Basen und gegebenenfalls in Gegenwart eines inerten Lösungsmittels umsetzt.

Hierbei haben die Erfinder überraschenderweise festgestellt, dass sich sowohl Mischungen zyklischer-verzweigter Siloxane vom D/T-Typ, die ausschließlich aus D- und T-Einheiten aufweisenden Siloxanen bestehen und deren mit ²⁹Si-NMR-Spektroskopie bestimmbarer summarischer Anteil der in der Siloxanmatrix vorhandenen D- und T-Einheiten, die Si-Alkoxy- und/oder SiOH-Gruppen aufweisen, kleiner 2 Molprozent, bevorzugt kleiner 1 Molprozent ist, und dass sie des Weiteren vorteilhafterweise zumindest 5 Gew.-% Siloxancyclen, wie vorzugsweise Oktamethylcyclotetrasiloxan (D₄), Dekamethylcyclopentasiloxan (D₅) und/oder deren Mischungen enthalten, als auch
Mischungen zyklischer-verzweigter, ausschließlich D- und T-Einheiten aufweisender Siloxane deren mit ²⁹Si-NMR-Spektroskopie bestimmbarer summarischer Anteil der in der Siloxanmatrix vorhandenen D- und T-Einheiten, die Si-Alkoxy- und/oder SiOH-Gruppen aufweisen, größer 2 und kleiner 10 Molprozent sind, besonders gut für den Einsatz im erfinderischen Schritt 1 eignen.

Die im ersten Schritt eingesetzten zyklisch-verzweigten Siloxane vom D/T-Typ sind sowohl im experimentellen Teil beispielhaft beschrieben als auch in EP3401353 A1 und EP3321304 A1 detailliert beschrieben.

Der Begriff des inerten Lösungsmittels umfasst all jene Lösungsmittel, welche unter den Bedingungen der hier ausgeführten Reaktion mit potentiellen Reaktionspartnern nicht oder allenfalls in verschwindend geringem Maße reagieren. Insbesondere ist das inerte Lösungsmittel ein aromatisches, bevorzugt alkylaromatisches Lösungsmittel und ganz besonders bevorzugt Toluol.

Die im Acetylierungsschritt gegebenenfalls noch hinzugefügten, einfachen Siloxanzyklen umfassen insbesondere Oktamethylcyclotetrasiloxan, Dekamethylcyclopentasiloxan, Dodekamethylcyclohexasiloxan und/ oder deren beliebig zusammengesetzte Abmischungen, was einer bevorzugten Ausführungsform der Erfindung entspricht.

Die Beobachtung, dass sich auch diejenigen Mischungen der D- und T-Einheiten aufweisenden Siloxane zur erfindungsgemäßen Weiterverarbeitung eignen, die einen erhöhten Gehalt an Si-Alkoxy- und/oder SiOH-Gruppen aufweisen, ist für den Fachmann eingedenk der in der EP3467006 und EP3401353 beschriebenen Schwierigkeiten bei deren Äquilibrierung nicht vorhersehbar.

So wird im Rahmen der hier vorliegenden Erfindung im experimentellen Teil neben der erfindungsgemäßen Verwendung eines zyklisch-verzweigten Siloxans mit einem angestrebten D-/ T-Verhältnis von 6 : 1 und einem Gehalt an spektroskopisch erfassten Si-Einheiten, die Si-Alkoxy- beziehungsweise SiOH-Gruppen aufweisen von 0,43 Molprozent (Beispiele 2, 3, 4 und 5) ebenfalls die erfindungsgemäße Verwendung eines zyklisch-verzweigten Siloxans mit einem angestrebten D-/ T-Verhältnis von 6 : 1 und einem Gehalt an spektroskopisch erfassten Si-Einheiten, die Si-Alkoxy- beziehungsweise SiOH-Gruppen aufweisen von 4,0 Molprozent gezeigt. (Beispiele 7 und 8).

Da die erfindungsgemäß resultierenden, im Siloxanteil verzweigten SiOC-verknüpften Polyethersiloxane sich von äquilibrierten Siloxanoligomeren herleiten, ist die anwendungstechnische Qualität sichergestellt.

Die Herstellung eines einfach verzweigten, Acetoxygruppen tragenden Siloxangerüstes durch Substitution Silicium-gebundenen Chlors durch Essigsäure sowie der mit Salzanfall verbundene Austausch von Acetoxygruppen, durch Polyetheroxyreste, sind in der US 4380451, ibid. Example 1 beschrieben. Hierbei wird unter starkem Rühren das Acetoxygruppen tragende Siloxan in Toluol vorgelegt und man lässt eine Mischung eines Butanol-gestarteten Polyetherols in Toluol binnen 15 Minuten zulaufen, um dann binnen 45 Minuten Ammoniak einzuleiten. Man erhitzt die Reaktionsmischung dann auf 80°C, fügt eine kleine Menge Isopropanol hinzu und sättigt die Matrix im Verlauf von 3 Stunden weiter mit Ammoniak. Nach Abkühlen auf Raumtemperatur trennt man die Salze durch Filtration ab, und destilliert das Toluol bei 100°C und einem Hilfsvakuum von 20 mbar.

Dieser auf Chlorsilanen beruhende und mit erheblichem Salzanfall verbundene Syntheseweg ist allerdings unter den Gesichtspunkten betrieblicher Herstellung nachteilig, da man einen erheblichen Aufwand für die Filtration sowie damit einhergehenden Produktverlusten akzeptieren muss.

Überraschenderweise wurde im Rahmen dieser Erfindung jedoch weiterhin festgestellt, dass sich der Austausch Acetoxy- vs. Polyetheroxy-Rest an Siloxanen auch ohne den Einsatz einer zur Neutralisation freigesetzter Essigsäure ausreichenden Menge an zugefügter Hilfsbase, wie zum Beispiel Ammoniak, erfolgreich und quantitativ durchführen lässt (Beispiele 3 und 4).

Somit ist ein weiterer Gegenstand und eine weitere bevorzugte Ausführungsform dieser Erfindung der salzfreie Austausch von Acetoxygruppen, die an verzweigte Siloxangerüste gebunden sind, durch Polyetheroxyreste, indem man das trifluormethansulfonsaure Acetoxygruppen tragende, verzweigte Siloxan gegebenenfalls in Gegenwart von Basen in einem Lösungsmittel zusammen mit dem Polyetherol unter Rühren zur Reaktion bringt und dann im Rahmen einer Destillation die entstandene Essigsäure und Reste eingesetzten Acetanhydrids gegebenenfalls zusammen mit Anteilen des eingesetzten Lösungsmittels entfernt. Dies entspricht einer bevorzugten Ausführungsform der Erfindung zum Austausch der Siloxan gebundenen Acetoxygruppen durch die Umsetzung mit Polyetherolen.

Bevorzugt sind dabei solche Lösungsmittel, die im Sinne der angestrebten Substitutionsreaktion (Austausch Acetoxy- vs. Polyetheroxy-Rest) inert sind und in bevorzugter Weise mit der entstehenden Essigsäure ein thermisch abtrennbares Azeotrop bilden. Dies entspricht einer weiteren bevorzugten Ausführungsform der Erfindung, wobei der Einsatz eines aromatischen, vorzugsweise alkylaromatischen Lösungsmittels bevorzugt ist.

Unter den mit Essigsäure binäre Azeotrope bildenden Lösungsmitteln ist Toluol ganz besonders bevorzugt. Der Einsatz von Toluol entspricht daher einer bevorzugten Ausführungsform der Erfindung. Die Siedepunkte von Toluol und Essigsäure sind mit 110,6 bzw. 118,5°C und der Siedepunkt des binären Azeotrops mit 105,4°C angegeben. Das Azeotrop besitzt eine Zusammensetzung von 72 Gew.-% Toluol und 28 Gew.-% Essigsäure (Quelle: Handbook of Chemistry and Physics, 58th Edition, Seite D2, CRC-Press (1977-1978), West Palm Beach).

Das mit der Azeotropbildung einhergehende, thermische Auskreisen der Essigsäure stellt den vollständigen Austausch der am Siloxangerüst gebundenen Acetoxyfunktionen gegen Polyetheroxyreste sicher und entspricht daher einer besonders bevorzugten Ausführungsform der Erfindung.

Ganz besonders bevorzugt ist hierbei außerdem das Anlegen eines Hilfsvakuums, da es die thermische Belastung des entstandenen SiOC-verknüpften, verzweigten Polyethersiloxans minimiert (Beispiele 3 und 5).

Wird die erfindungsgemäß nach dem zweiten Schritt anfallende Mischung enthaltend ein im Siloxanteil verzweigtes, Acetoxygruppen tragendes, äquilibriertes Siloxan neben gegebenenfalls nichtumgesetztem Acetanhydrid und der darin befindlichen Katalysatorsäure im dritten Schritt mit einem Polyetherol ohne Hinzufügen einer Base in der Wärme umgesetzt, so entstehen in Abhängigkeit von der gewählten Stöchiometrie der Reaktanden, der Temperatur und der Reaktionszeit, neben dem SiOC-verknüpften verzweigten Siliconpolyether auch wechselnde Anteile eines Acetylgruppen endverschlossenen Polyethers. Dies entspricht einer bevorzugten Ausführungsform der Erfindung.

Wird hingegen eine Hilfsbase wie zum Beispiel Natriumhydrogencarbonat in dem Polyetherol vorgelegt und dieses sodann mit der aus dem zweiten Schritt stammenden Mischung enthaltend ein im Siloxanteil verzweigtes, Acetoxygruppen tragendes, äquilibriertes Siloxan neben nichtumgesetztem Acetanhydrid und der darin befindlichen Katalysatorsäure beaufschlagt, so führt die frühe Neutralisation der Säure dazu, dass man keine Veresterung des hydroxyfunktionellen Polyethers beobachtet (Beispiel 4). Dies entspricht einer bevorzugten Ausführungsform der Erfindung.

Erfindungsgemäß besonders bevorzugt erfolgt der Austausch der Siloxan gebundenen Acetoxygruppen in Gegenwart einer Base, insbesondere in Gegenwart von Natiumhydrogencarbonat, Ammoniak oder eines organischen Amins.

Nimmt man die Neutralisation der im Reaktionssystem vorhandenen Säure jedoch zu einem späteren Zeitpunkt - insbesondere nach der thermischen Abtrennung entstandener Essigsäure, restlichen Acetanhydrids und gegebenenfalls eingesetzten Lösungsmittels, vor, so wird das im System befindliche Polyetherol in geringen Anteilen mit Acetylendgruppen verschlossen. Die längere Einwirkdauer der im System vorhandenen Säure führt zudem erfahrungsgemäß häufig zu etwas stärker verfärbten Produkten (Beispiel 3).

In diesem Fall besteht nach destillativer Entfernung der Essigsäure die erfindungsgemäß erhaltene Zubereitung aus einem SiOC-verknüpften verzweigten Siliconpolyether nebst einem Polyetherol und einem Acetylgruppen endverschlossenen Polyetherol. Solche Zubereitungen mit reduzierter Hydroxyfunktionalität können in speziellen Anwendungen von Interesse sein und sind ebenfalls Gegenstand vorliegender Erfindung.

Dieses erfindungstypische Nebenprodukt lässt sich durch begleitende ¹³C-NMR- und ¹H-NMR-Spektroskopie erfassen, da insbesondere die Verschiebung des Polyether-veresterten Carboxylatkohlenstoffs mit δ ca. 171,5 ppm charakteristisch ist.

Erstaunlicherweise wurde jedoch auch gefunden, dass die lösemittelfreie Transformation trifluormethansulfonsaurer verzweigter, Acetoxyfunktionen aufweisender Siloxane zu im Siloxanteil verzweigten, SiOC-verknüpften Polyethersiloxanen sehr zügig (innerhalb 1 Stunde) und überdies bei sehr moderaten Temperaturen (T = 50°C) quantitativ gelingt (Beispiel 4).

Wenn der Austausch der Siloxan gebundenen Acetoxygruppen durch die Umsetzung mit Polyetherolen lösemittelfrei erfolgt, so liegt folglich eine weitere bevorzugte Ausführungsform der Erfindung vor.

Somit ist ein weiterer Gegenstand und eine weitere bevorzugte Ausführungsform dieser Erfindung der salzfreie Austausch von an verzweigte Siloxangerüste gebundenen Acetoxyfunktionen durch Polyetheroxyreste , indem man das trifluormethansulfonsaure Acetoxygruppen tragende, verzweigte Siloxan zusammen mit dem Polyetherol unter Freisetzung von Essigsäure umsetzt.

Die Vorteile dieses erfindungsgemäßen, salzfreien Prozessschrittes sind für den Fachmann evident, da Filtrationsschritte bei Produktionsverfahren immer zeitintensiv, verlustbehaftet und zudem entsorgungsrelevant sind.

Im Rahmen der vorliegenden Erfindung wurde festgestellt, dass sich die Acetoxyfunktionalisierung der DT-Zyklen prinzipiell sowohl durch den Einsatz von Homogen- als auch Heterogensäuren katalysieren lässt. Ebenfalls wurde gefunden, dass sich sowohl gewisse Lewis-als auch Brönstedt-Säuren zu diesem Zwecke eignen. Insbesondere können wasserfreies Eisen(III)chlorid, Filtrol® (stark saure Bleicherde bzw. säurebehandelte Bleicherden), konzentrierte Schwefelsäure und besonders bevorzugt Trifluormethansulfonsäure zur Katalyse des Acetylierungsschrittes eingesetzt werden. Dies entspricht einer bevorzugten Ausführungsform der Erfindung.

Hinsichtlich ihrer Wirksamkeit differenzieren sich die sauren Katalysatoren allerdings sehr.

Es wurde gefunden, dass die Trifluormethansulfonsäure nicht nur den Einbau von Acetoxyfunktionen in das verzweigte Siloxan erleichtert, sondern darüber hinaus auch die vollständige Äquilibrierung des so gewonnenen Acetoxygruppen tragenden, verzweigten Siloxans sicherstellt. Neben anderen analytischen Verfahren wie der Gel-Permeations-Chromatographie (GPC) ist zur praxistauglichen Bewertung der erzielten Äquilibrierqualität bereits ein einfacher Handtest geeignet, bei dem man auf einen schwarzen Bakelitdeckel ein Volumen von 0,2 bis 0,4 ml des zu prüfenden verzweigten, trifluormethansulfonsauren Acetoxysiloxans aufbringt und an Luft härten lässt.

Vollständig durchäquilibrierte, verzweigte Acetoxysiloxane bilden sodann im Verlauf von weniger als 1 Minute ein festes, weißes Gel, dessen Präsenz sich gut vor dem Hintergrund des schwarzen Bakelitdeckels abhebt (Beispiel 2 und Beispiel 7). Unvollständig äquilibrierte, verzweigte Acetoxysiloxane hingegen liefern stets nur Proben mit partiellem Gelanteil und Restflüssigkeit.

Werden die aus der Acetoxyfunktionalisierung der DT-Zyklen hervorgehenden, verzweigten Acetoxysiloxane diesem empfindlichen Test unterworfen, so wird deutlich, dass wasserfreies Eisen(III)chlorid, Filtrol® (stark saure Bleicherde bzw. säurebehandelte Bleicherden) und konzentrierte Schwefelsäure zwar die Acetoxyfunktionalisierung katalysieren, jedoch nicht zu vollständig äquilibrierten, verzweigten Acetoxysiloxanen führen.

Man kann gewünschtenfalls die unvollständig äquilibrierten Acetoxysiloxane dann einer Äquilibrierung mit Trifluormethansulfonsäure unterziehen.

Des Weiteren ist Trifluormethansulfonsäure insofern besonders bevorzugt, als dass sie keine Tendenz zur Produktverfärbung wie Eisen(III)chlorid besitzt und auch nicht wie der saure Feststoff Filtrol® durch Filtration zwingend vom Zwischenprodukt abgetrennt werden muss.

Trifluormethansulfonsäure soll vielmehr im Acetoxygruppen-tragenden, verzweigten Siloxanzwischenprodukt verbleiben (siehe erfindungsgemäßes Beispiel 1 und erfindungsgemäßes Beispiel 2).

Zur Einführung der Acetoxygruppen wird Trifluormethansulfonsäure bevorzugt in Konzentrationen von 0,05 bis 0,2 Gewichtsprozent (Gew.-%), besonders bevorzugt in Konzentrationen von 0,07 bis 0,15 Gewichtsprozent (Gew.-%) bezogen auf die Gesamtmasse des Reaktionsansatzes eingesetzt. Dies entspricht einer bevorzugten Ausführungsform der Erfindung.

Somit adressieren wasserfreies Eisen(III)chlorid, Filtrol® (stark saure Bleicherde) und konzentrierte Schwefelsäure als Katalysatoren nur den ersten Schritt des erfindungsgemäßen Verfahrens, während Trifluormethansulfonsäure als Katalysator den ersten und zweiten Schritt vorteilhafterweise zu einem Prozessschritt verdichtet, das heißt, sowohl die Acetylierung der zyklisch-verzweigten Siloxane vom D/T-Typ als auch die Äquilibrierung des Acetoxysiloxans katalysiert. Darüber hinausgehend kann die Trifluormethansulfonsäure, wie erläutert, zur Nacharbeitung unvollständig äquilibrierter Acetoxysiloxane eingesetzt werden.

Es entspricht daher einer bevorzugten Ausführungsform der Erfindung, dass bei Einsatz der Trifluormethansulfonsäure als Katalysator der erste Schritt des erfindungsgemäßen Verfahrens, also die säurekatalysierte Umsetzung von Mischungen zyklischer-verzweigter Siloxane vom D/T-Typ gegebenenfalls in Abmischung mit einfachen Siloxanzyklen mit Acetanhydrid zu Acetoxygruppen-tragenden, verzweigten Siloxanen, und der zweite Schritt, also die Äquilibrierung des Acetoxy-modifizierten verzweigten Siloxane, zu einem einzigen Prozessschritt verdichtet werden.

Im abschließenden (also dritten) Schritt des erfindungsgemäßen Verfahrens wird der Austausch der Acetoxygruppen durch die Umsetzung des trifluormethansulfonsauren Acetoxysiloxans mit Polyetherolen vorgenommen.

Hierbei sind die erfindungsgemäß einsetzbaren Polyetherole vorzugsweise solche der Formel (I)

A[-O-(CH₂-CHR'-O-)ₘ-(CH₂-CH₂-O-)ₙ--(CH₂-CH(CH₃)-O-)ₒ-Z]ₐ (I)

mit
A entweder Wasserstoff oder ein mindestens ein Kohlenstoffatom aufweisender gesättigter oder ungesättigter organischer Rest, bevorzugt ein mindestens ein Kohlenstoffatom aufweisender organischer Rest einer organischen Startverbindung zur Bereitung der Verbindung, besonders bevorzugt eine Methyl-, Ethyl-, Propyl-, Butyl-, Vinyl- oder Allylgruppe ist,
R' unabhängig voneinander eine gesättigte Alkylgruppe mit 2-18 C-Atomen ist oder ein aromatischer Rest, respektive bevorzugt eine Ethylgruppe oder ein Phenylrest,
Z entweder Wasserstoff, ein linearer oder verzweigter, gesättigter oder ungesättigter Kohlenwasserstoffrest mit 1-18 C-Atomen, bevorzugt eine Methyl-, Ethyl-, Propyl-, Butyl-, Vinyl- oder Allylgruppe ist, oder
der Rest einer organischen Säure der Formel -C(=O)-ZE, wobei ZE ein organischer Rest, bevorzugt ein linearer oder verzweigter, gesättigter oder olefinisch ungesättigter Kohlenwasserstoffrest mit 1 bis 17 C-Atomen, bevorzugt eine Methylgruppe ist, oder ein aromatischer Kohlenwasserstoffrest mit 6 bis 20 C-Atomen, bevorzugt ein Phenylrest ist, oder
der Rest der Formel -C(=O)-O-ZC ist, wobei ZC ein organischer Rest, bevorzugt ein linearer oder verzweigter, gesättigter oder olefinisch ungesättigter Kohlenwasserstoffrest mit 1 bis 18 C-Atomen, bevorzugt eine Methyl-, Ethylgruppe ist, oder ein aromatischer Kohlenwasserstoffrest mit 6 bis 20 C-Atomen, bevorzugt ein Phenylrest,
   - m: gleich 0 bis zu 50, bevorzugt 0 bis zu 30, besonders bevorzugt 0 bis zu 20 ist
   - n: gleich 0 bis zu 250, bevorzugt 3 bis zu 220, besonders bevorzugt 5 bis zu 200 ist
   - o: gleich 0 bis zu 250, bevorzugt 3 bis zu 220, besonders bevorzugt 5 bis zu 200 ist
   - a: gleich 1 bis zu 8, bevorzugt größer 1 bis zu 6, besonders bevorzugt 1, 2, 3 oder 4,
mit der Maßgabe, dass die Summe aus m, n und o gleich oder größer als 1 ist und mit der Maßgabe, dass mindestens A oder Z Wasserstoff repräsentieren.

Vorzugsweise werden Verbindungen der Formel (I) verwendet, die ausschließlich Wasserstoffatome, Sauerstoffatome und Kohlenstoffatome aufweisen.

Die hier wiedergegebenen Indexzahlen und die Wertbereiche der angegebenen Indizes können als Mittelwerte (Gewichtsmittel) der möglichen statistischen Verteilung der tatsächlichen vorhandenen Strukturen und/oder deren Mischungen verstanden werden. Dies gilt auch für als solche an sich exakt wiedergegebene Strukturformeln, wie beispielsweise für Formel (I).

Die mit m, n und o bezeichneten Einheiten können wahlweise statistisch gemischt oder auch blockweise in der Kette enthalten sein. Statistische Verteilungen können blockweise aufgebaut sein mit einer beliebigen Anzahl an Blöcken und einer beliebigen Sequenz oder einer randomisierten Verteilung unterliegen, sie können auch alternierend aufgebaut sein oder auch über die Kette einen Gradienten bilden, insbesondere können sie auch alle Mischformen bilden, bei denen gegebenenfalls Gruppen unterschiedlicher Verteilungen aufeinander folgen können. Spezielle Ausführungen können dazu führen, dass die statistischen Verteilungen durch die Ausführung Beschränkungen erfahren. Für alle Bereiche, die nicht von der Beschränkung betroffen sind, ändert sich die statistische Verteilung nicht.

Unter dem Rest A werden im Rahmen der vorliegenden Erfindung vorzugsweise Reste von Substanzen verstanden, die den Anfang der herzustellenden Verbindung der Formeln (I) bilden, die durch die Anlagerung von Alkylenoxiden erhalten wird. Die Startverbindung ist vorzugsweise ausgewählt aus der Gruppe der Alkohole, Polyetherole oder Phenole. Bevorzugt wird als Startverbindung enthaltend die Gruppe A ein ein- oder mehrwertiger Polyetheralkohol und/oder ein- oder mehrwertiger Alkohol, oder deren beliebige Mischungen verwendet. Für den Fall, dass mehrere Startverbindungen A als Gemisch verwendet wurden, kann der Index a auch einer statistischen Verteilung unterliegen. Z kann darüber hinaus auch der Rest einer Startverbindung Z-OH sein.

Als Monomere in der Alkoxylierungsreaktion werden bevorzugt Ethylenoxid, Propylenoxid, Butylenoxid und/oder Styroloxid eingesetzt sowie beliebige Mischungen dieser Epoxide. Die unterschiedlichen Monomere können in reiner Form oder gemischt eingesetzt werden. Auch kann die Dosierung eines weiteren Epoxides zu einem bereits in der Reaktionsmischung vorliegenden Epoxides kontinuierlich über die Zeit erfolgen, so dass ein zunehmender Konzentrationsgradient des kontinuierlich zugegebenen Epoxides entsteht. Die entstehenden Polyoxyalkylene unterliegen damit einer statistischen Verteilung im Endprodukt, wobei Beschränkungen durch die Dosierung bestimmt werden können. Im hier genannten Fall der kontinuierlichen Zugabe eines weiteren Epoxides zu einem bereits in der Reaktionsmischung vorliegenden Epoxides ist dann über die Kettenlänge ein Strukturgradient zu erwarten. Die Zusammenhänge zwischen Dosierung und Produktstruktur sind dem Fachmann bekannt.

Bevorzugt werden in dem erfindungsgemäßen Verfahren als Verbindungen der Formel (I) solche eingesetzt, die eine gewichtsmittlere Molmasse von 76 bis 10.000 g/mol, bevorzugt von 100 bis 8.000 g/mol und besonders bevorzugt von 200 bis 6.000 g/mol aufweisen.

Als Verbindungen der Formel (I) können bevorzugt solche Verbindungen eingesetzt werden, die aus einer Verbindung der Formel (II)

A[-OH]a (II)

hervorgegangen sind, wobei der Rest A sich aus Verbindungen ableitet ausgewählt aus der Gruppe der ein- oder mehrwertigen monomeren, oligomeren oder polymeren Alkohole, Phenole, Kohlenhydrate oder Kohlenhydratderivate, wobei besonders bevorzugt solche Verbindungen eingesetzt werden, bei denen sich der Rest A von einem oder mehreren Alkoholen aus der Gruppe von Butanol, 1-Hexenol, Octanol, Dodecanol, Stearylalkohol, Vinyloxybutanol, 2-Ethylhexanol, Cyclohexanol, Benzylalkohol, Ethylenglykol, Propylenglykol, Di-, Tri- oder Polyethylenglykol, 1,2-Propylenglykol, Di- und Polypropylenglykol, 1,4-Butandiol, 1,6-Hexandiol, Trimethylolpropan, Glycerin, Pentaerythrit, Sorbit, Allylalkohol, Vinylalkohol oder von auf Naturstoffen basierenden, Hydroxylgruppen tragenden Verbindungen ableitet.

Besonders bevorzugt werden solche Verbindungen eingesetzt, die bei einem Druck von 101325 Pa und einer Temperatur von 23 °C flüssig vorliegen. Unter diesen sind Butyldiglykol, Dipropylenglykol und Propylenglykol ganz besonders bevorzugt.

Erfindungsgemäß als Polyetherole einsetzbare Verbindungen der Formel (I) und Verfahren zu deren Herstellung werden z. B. in EP 0075703, US 3775452 und EP 1031603 beschrieben. Geeignete Verfahren bedienen sich z.B. basischer Katalysatoren wie z.B. der Alkalihydroxide und der Alkalimethylate. Besonders verbreitet und seit vielen Jahren bekannt ist der Einsatz von KOH. Typischerweise wird ein meist niedermolekularer, dass bedeutet, mit einem Molekulargewicht von kleiner als 200 g/mol, hydroxyfunktioneller Starter wie Butanol, Allylalkohol, Propylenglykol oder Glycerin in Gegenwart des alkalischen Katalysators mit einem Alkylenoxid wie Ethylenoxid, Propylenoxid, Butylenoxid oder einem Gemisch verschiedener Alkylenoxide zu einem Polyoxyalkylenpolyether umgesetzt. Die stark alkalischen Reaktionsbedingungen bei dieser sogenannten Living-Polymerisation fördern verschiedene Nebenreaktionen. Die Verbindungen der Formeln (II) können auch durch Doppelmetallcyanid-Katalyse hergestellt werden. Durch Doppelmetallcyanid-Katalyse hergestellte Polyether haben in der Regel einen besonders niedrigen Gehalt an ungesättigten Endgruppen von kleiner oder gleich 0,02 Milliäquivalenten pro Gramm Polyether-Verbindung (meq/g), bevorzugt kleiner oder gleich 0,015 meq/g, besonders bevorzugt kleiner oder gleich 0,01 meq/g (Bestimmungsmethode ASTM D2849-69), enthalten deutlich weniger Monole und haben in der Regel eine geringe Polydispersität von weniger als 1,5. Die Polydispersität (PD) kann nach einer dem Fachmann an sich bekannten Methode ermittelt werden, indem durch Gelpermeationschromatographie (GPC) sowohl das zahlenmittlere Molekulargewicht (Mn) wie auch das gewichtsmittlere Molekulargewicht (Mw) bestimmt werden. Die Polydispersität ergibt sich als PD = Mw/Mn. Die Herstellung derartiger Polyether wird z. B. in der US-A 5158922 und der EP-A 0654302 beschrieben.

Unabhängig vom Herstellungsweg sind Verbindungen der Formel (I) bevorzugt geeignet, die vorzugsweise eine Polydispersität Mw/Mn von 1,0 bis 1,5 aufweisen, bevorzugt mit einer Polydispersität von 1,0 bis 1,3.

Abhängig vom Alkylenoxid-Terminus können die erfindungsgemäß einzusetzenden Polyetherole eine primäre oder sekundäre OH-Funktion besitzen. Unter dem Aspekt der später erzielten hydrolytischen Beständigkeit der gewonnenen SiOC-verknüpften Polyethersiloxane ist im Rahmen der erfinderischen Lehre der Einsatz von solchen Polyetherolen bevorzugt, die eine sekundäre Alkoholfunktion aufweisen.

Der erfindungsgemäße Austausch der Acetoxygruppen durch Umsetzung mit Polyetherolen zu SiOC verknüpften Polyethersiloxanen kann in Gegenwart von Lösungsmitteln oder kann bevorzugt ohne Lösemittel durch innige Vermischung der Reaktanden unter Rühren bei Umsetzungstemperaturen von vorzugsweise 20°C bis 60°C erfolgen.

Das molare Verhältnis der Reaktanden wird dabei insbesondere so bemessen, dass man mindestens 1 Mol an Polyether gebundene OH-Funktionalität pro Mol Acetoxygruppe des verzweigten Siloxan einsetzt. Bevorzugt werden 1 bis 2 Mol an Polyether gebundene OH-Funktionalität, bevorzugt 1,1 bis 1,6 Mol an Polyether gebundene OH-Funktionalität, besonders bevorzugt 1,2 bis 1,4 Mol an Polyether gebundene OH-Funktionalität pro Mol Acetoxygruppe des verzweigten Siloxans eingesetzt.

Die in einer Vielzahl von grenzflächenaktiven Anwendungen eingesetzten SiOC-verknüpften, verzweigten Polyethersiloxane sind häufig davon geprägt, dass sie Polyetherreste unterschiedlicher Zusammensetzung und/ oder Molekulargewichts enthalten. Somit ist eine Ausgestaltungsmöglichkeit des erfindungsgemäßen Verfahrens das Acetoxygruppen enthaltende, äquilibrierte verzweigte Siloxan im 3. Schritt mit einer Mischung verschiedenartiger Polyetherole umzusetzen. Dem Fachmann vertraut ist das zum Teil unterschiedliche Reaktionsverhalten der eingesetzten Polyetherole, so dass man dem Ziel gewidmet eine besondere Grenzflächenaktivität hervorzurufen, einige orientierende Handversuche mit Polyetherol-Mischungen macht und diese so erhaltenen Produkte dann jeweils anwendungstechnisch bewertet, um ein optimales Ergebnis zu erzielen.

Der Austausch der Acetoxygruppen durch Umsetzung mit Polyetherolen erfolgt erfindungsgemäß vorzugsweise im Verlauf von 30 Minuten bis 3 Stunden.

Ein weiterer Gegenstand der Erfindung ist eine Zubereitung, hergestellt nach dem erfindungsgemäßen Verfahren wie zuvor beschrieben, enthaltend wenigstens einen SiOC-verknüpften, verzweigten Siliconpolyether, ein Polyetherol und einen mit einer Acetylgruppe endverschlossenen Polyether, mit der Maßgabe, dass der im Siliconpolyether enthaltene Polyetherrest chemisch identisch ist mit dem Polyetherrest des Polyetherols und mit dem Polyetherrest des mit einer Acetylgruppe endverschlossenen Polyetherols und dass der Anteil des SiOC-verknüpften, verzweigten Siliconpolyethers mindestens 50 Massenprozent bezogen auf die Gesamtzubereitung beträgt.

Ein weiterer Gegenstand der Erfindung ist die Verwendung dieser Zubereitung, hergestellt nach dem erfindungsgemäßen Verfahren wie zuvor beschrieben, als Entschäumer, als Schaumstabilisatoren, Netzmittel, Lack- und Verlaufsadditive sowie als Dismulgatoren.

### Beispiele

Die folgenden Beispiele dienen dem Fachmann allein zur Erläuterung dieser Erfindung und stellen keinerlei Beschränkung des beanspruchten Verfahrens dar. Die erfindungsgemäße Bestimmung der Wassergehalte erfolgt grundsätzlich mit der Karl-Fischer-Methode in Anlehnung an DIN 51777, DGF E-III 10 und DGF C-III 13a. Die ²⁹Si-NMR-Spektroskopie diente in allen Beispielen der Reaktions-verfolgung.

Die ²⁹Si-NMR-Proben werden im Rahmen dieser Erfindung bei einer Messfrequenz von 79,49 MHz in einem Bruker Avance III Spektrometer, das mit einem Probenkopf 287430 mit 10 mm Spaltbreite ausgestattet ist, bei 22°C gelöst in CDCl₃ und gegen Tetramethylsilan (TMS) als externem Standard [δ(²⁹Si) = 0,0 ppm] gemessen.

Die in den Beispielen eingesetzten DT-Zyklen werden nach den Verfahren der EP3401353 bzw. EP3321304 hergestellt.

Die eingesetzten Polyetherole besitzen Wassergehalte von ca. 0,2 Massen-% und werden ohne weitere Vortrocknung verwendet. Eingesetztes Toluol besitzt einen Wassergehalt von 0,03 Massen-% und wird ebenfalls ohne Vortrocknung verwendet.

### Beispiel 1

### Herstellung eines zyklisch-verzweigten Siloxans mit einem angestrebten D-/ T-Verhältnis von 6 : 1

In einem 10-I-Vierhalsrundkolben mit KPG-Rührer und aufgesetztem Rückflusskühler werden 783 g (4,39 mol) Methyltriethoxysilan zusammen mit 978,7 g (2,64 mol) Dekamethylcyclopentasiloxan unter Rühren auf 60°C erwärmt, mit 2,98 g Trifluormethansulfonsäure beaufschlagt und für 4 Stunden äquilibriert. Dann werden 237 g Wasser sowie 59,3 g Ethanol hinzugefügt und der Ansatz wird für weitere 2 Stunden auf Rückflusstemperatur erhitzt. Man fügt 159,0 g Wasser sowie 978,8 g (2,64 mol) Dekamethylcyclopentasiloxan (D₅) hinzu und tauscht den Rückflusskühler gegen eine Destillationsbrücke aus und destilliert innerhalb der folgenden Stunde die bis 90°C flüchtigen Bestandteile ab. Man fügt dann dem Reaktionsansatz 3000 ml Toluol hinzu und destilliert bis zu einer Sumpftemperatur von 100°C am Wasserabscheider das noch im Stoffsystem befindliche Wasser ab. Man lässt den Reaktionsansatz auf etwa 60°C abkühlen, neutralisiert die Säure durch Zugabe von 60,0 g festen Natriumhydrogencarbonats und rührt dann zur vollständigen Neutralisation noch weitere 30 Minuten nach. Nach Abkühlen auf 25°C werden mit Hilfe eines Faltenfilters die Salze abgetrennt.

Bei 70°C und einem angelegten Hilfsvakuum von < 1mbar wird das als Lösungsmittel eingesetzte Toluol abdestilliert. Der Destillationssumpf ist eine farblose, leichtbewegliche Flüssigkeit deren ²⁹Si-NMR-Spektrum ein D-/T-Verhältnis von 5,2 : 1 (angestrebt 6,0 : 1) zuweist. Bezogen auf die Summe der spektroskopisch erfassten Si-Einheiten kommt den D- und T-Einheiten, die Si-Alkoxy- beziehungsweise SiOH-Gruppen ein Anteil von 0,43 Molprozent zu. Die gaschromatographische Analyse der Flüssigkeit weist außerdem einen Anteil von ca. 15 Gewichtsprozent an einfachen Siloxancyclen in Form von D₄, D₅ und D₆ nach. Das GPC weist eine breite Molmassenverteilung auf, gekennzeichnet durch Mw = 55258 g/ mol; Mn 1693 g/ mol und Mw/ Mn = 32,63.

### Beispiel 2 (erfindungsgemäße Schritte 1 und 2)

### Herstellung eines Acetoxy-terminierten, verzweigten Siloxans

In einem 500-ml-Vierhalskolben mit KPG-Rührer, Innenthermometer und aufgesetztem Rückflusskühler werden 22,8 g (0,223 mol) Essigsäureanhydrid zusammen mit 101,2 g der in Beispiel 1 hergestellten DT-Zyklen (D/ T-Verhältnis nach ²⁹Si-NMR-Spektrum = 5,2 : 1, M = 452,8 g/ mol und einem Anteil von SiOH/ SiOEt-Gruppierungen von 0,43 Mol-%) und 125,9 g Dekamethylcyclopentasiloxan (D₅) unter Rühren vorgelegt und mit 0,25 g (0,15 ml) Trifluormethansulfonsäure (0,1 Massen-% bezogen auf den Gesamtansatz) versetzt und zügig auf 150°C erhitzt. Die zu Beginn leicht trübe Reaktionsmischung wird unter weiterem Rühren für 6 Stunden bei dieser Temperatur belassen.

Nach Erkalten des Ansatzes wird eine farblos-klare, leichtbewegliche Flüssigkeit isoliert, deren ²⁹Si-NMR-Spektrum die Präsenz von Si-Acetoxygruppen in einer Ausbeute von ca. 80% bezogen auf eingesetztes Essigsäureanhydrid sowie das vollständige Verschwinden spektroskopisch erfassbarer Anteile an Si-Alkoxy- und SiOH- Gruppen belegt. Etwa 0,7 ml der Flüssigkeit werden mit Hilfe einer Pipette auf einen schwarzen Bakelitdeckel aufgetragen. In weniger als 1 Minute bildet sich ein festes, weißes Gel ohne flüssige Anteile, dessen Präsenz sich gut vor dem Hintergrund des schwarzen Bakelitdeckels abhebt und die vollständige Äquilibrierung des Acetoxysiloxans belegt.

### Beispiel 3 (erfindungsgemäßer Schritt 3)

### Herstellung eines verzweigten, SiOC-verknüpften Polyethersiloxans in Toluol mit später Neutralisation

In einem 500-ml-Vierhalskolben mit KPG-Rührer, Innenthermometer und aufgesetztem Rückflusskühler werden 76,1 g eines Butanol-gestarteten Polyetherols (Propylenoxid-Anteil von 100%) mit einer Molmasse von 1935 g/ mol (Molmasse bestimmt nach OH-Zahl) in 200 ml Toluol unter Rühren vorgelegt und mit 20 g des in Beispiel 2 hergestellten, verzweigten trifluormethansulfonsauren Acetoxysiloxans versetzt. Dann wird die Reaktionsmischung für 1 Stunde unter fortwährendem Rühren auf 40°C erwärmt. Der Rückflusskühler wird dann durch eine Destillationsbrücke mit Destillatvorlage ersetzt und unter Anlegen eines Hilfsvakuums wird der Ansatz bei 70°C von Toluol und Essigsäure destillativ befreit.

Nach Erkalten wird der Destillationssumpf mit 1,9 g Natriumhydrogencarbonat versetzt und man lässt das Salz ca. 30 Minuten einrühren. Dann werden die Salze mit Hilfe einer Filterpresse über eine Seitz K 300 Filterscheibe abgetrennt.

Erhalten wird ein dunkel-gelbliches, SiOC-verknüpftes verzweigtes Polyethersiloxan, dessen ²⁹Si-NMR-Spektrum die angestrebte Struktur absichert. Ein ergänzendes ¹³C-NMR-Spektrum zeigt, dass etwa 8 Molprozent des im Überschuss eingesetzten Polyetherols in acetylierter Form vorliegen.

### Beispiel 4 (erfindungsgemäßer Schritt 3)

### Lösemittelfreie Herstellung eines verzweigten, SiOC-verknüpften Polyethersiloxans mit früher Neutralisation

In einem 500-ml-Vierhalskolben mit KPG-Rührer, Innenthermometer und aufgesetztem Rückflusskühler werden 76,1 g eines Butanol-gestarteten Polyetherols (Propylenoxid-Anteil von 100%) mit einer Molmasse von 1935 g/ mol (Molmasse bestimmt nach OH-Zahl) unter Rühren vorgelegt, mit 0,4 g Natriumhydrogencarbonat versetzt und dann lässt man das Salz ca. 30 Minuten einrühren. 20 g des in Beispiel 2 hergestellten, verzweigten trifluormethansulfonsauren Acetoxysiloxans werden hinzugegeben und der Ansatz wird für 1 Stunde unter Rühren auf 50°C erwärmt.

Dann wird der Rückflusskühler durch eine Destillationsbrücke mit Vorlage ersetzt und unter Anlegen eines Hilfsvakuums von ≤ 1 mbar (Ölpumpe) wird bei einer Sumpftemperatur von 100°C im Laufe von 3 Stunden Essigsäure abdestilliert. Nach Abkühlen auf 25°C wird der Destillationssumpf mit 1,9 g NaHCO₃ versetzt. Man lässt das Hydrogencarbonat 30 Minuten einrühren und trennt dann die Salze mit Hilfe einer Filterpresse über eine Seitz K 300 Filterscheibe ab.

Erhalten wird eine hell-gelblich-klare, leichtbewegliche Flüssigkeit, deren zugehöriges ²⁹Si-NMR-Spektrum die Struktur des angestrebten, verzweigten, SiOC-verknüpften Polyethersiloxans belegt. Ein ergänzendes ¹³C-NMR-Spektrum zeigt, dass keinerlei Anteile des Polyetherols in acetylierter Form vorliegen

### Beispiel 5 (erfindungsgemäß) (Schritt 3)

### Herstellung eines verzweigten, SiOC-verknüpften Polyethersiloxans in Toluol mit früher Neutralisation

In einem 500-ml-Vierhalskolben mit KPG-Rührer, Innenthermometer und aufgesetztem Rückflusskühler werden 76,1 g eines Butanol-gestarteten Polyetherols (Propylenoxid-Anteil von 100%) mit einer Molmasse von 1935 g/ mol (Molmasse bestimmt nach OH-Zahl) in 200 ml Toluol unter Rühren vorgelegt und mit 20 g des in Beispiel 2 hergestellten, verzweigten trifluormethansulfonsauren Acetoxysiloxans versetzt.

Die Reaktionsmischung wird für 30 Minuten unter fortwährendem Rühren auf 50°C erwärmt. Dann wird im Verlauf von weiteren 30 Minuten zunächst die zur Neutralisation benötigte Menge an gasförmigem Ammoniak in die Reaktionsmatrix eingeleitet. Im Verlauf weiterer 45 Minuten leitet man noch einen leichten Ammoniakstrom ein, so dass das Reaktionsgemisch deutlich alkalische Reaktion zeigt (feuchtes Indikatorpapier).

Die ausgefallenen Salze werden über einen Doppelfaltenfilter von der toluolischen Phase abgetrennt.

Am Rotationsverdampfer bei 70°C Sumpftemperatur und einem angelegten Hilfsvakuum von 1 mbar wird das Rohprodukt destillativ von Toluol befreit.

Man isoliert die nahezu farblose Zubereitung eines SIOC-verknüpften verzweigten Polyethersiloxans, dessen angestrebte Struktur durch ein ²⁹Si-NMR-Spektrum abgesichert wird. Begleitende ¹³C-NMR- und ¹H-NMR-Spektroskopie belegen ferner, dass keinerlei Anteile Acetyl-endverschlossenen Polyetherols vorhanden sind.

### Beispiel 6

### Herstellung eines zyklisch-verzweigten Siloxans mit einem angestrebten D-/ T-Verhältnis von 6 : 1

In einem 500-ml-Vierhalsrundkolben mit KPG-Rührer und aufgesetztem Rückflusskühler werden 52,2 g (0,293mol) Methyltriethoxysilan zusammen mit 130,3 g (0,351 mol) Dekamethylcyclopentasiloxan unter Rühren auf 60°C erwärmt, mit 0,400 g Trifluormethansulfonsäure beaufschlagt und für 4 Stunden äquilibriert. Dann werden 15,8 g Wasser sowie 4,0 g Ethanol hinzugefügt und der Ansatz wird für weitere 4 Stunden auf Rückflusstemperatur (ca. 80°C) erhitzt. Man fügt 10,6 g Wasser sowie 200 ml Dekamethylcyclopentasiloxan (D₅) hinzu und tauscht den Rückflusskühler gegen eine Destillationsbrücke aus und destilliert innerhalb der folgenden Stunde die bis 90°C flüchtigen Bestandteile ab. Man belässt den Reaktionsansatz für weitere 2 Stunden bei 90°C, lässt dann auf 50°C abkühlen und fügt 5 ml einer 25%igen, wässrigen Ammoniaklösung hinzu und rührt zur vollständigen Neutralisation noch eine weitere Stunde nach.

Bei 100°C und einem angelegten Hilfsvakuum von < 1mbar werden Wasser und das als Lösungsmittel eingesetzte Dekamethylcyclopentasiloxan (D₅) abdestilliert. Nach Erkalten des Destillationssumpfes wird mit Hilfe eines Faltenfilters das ausgefallene Ammoniumtriflat abgetrennt. Das Filtrat ist eine farblose, leichtbewegliche Flüssigkeit deren ²⁹Si-NMR-Spektrum ein D-/T-Verhältnis von 6,44 : 1 (angestrebt 6,0 : 1) zuweist. Bezogen auf die Summe der spektroskopisch erfassten Si-Einheiten kommt den D- und T-Einheiten, die Si-Alkoxy- beziehungsweise SiOH-Gruppen tragen, ein Anteil von 4,0 Molprozent zu.

### Beispiel 7 (erfindungsgemäße Schritte 1 und 2)

### Herstellung eines Acetoxy-terminierten, verzweigten Siloxans

In einem 500-ml-Vierhalskolben mit KPG-Rührer, Innenthermometer und aufgesetztem Rückflusskühler werden 22,8 g (0,223 mol) Essigsäureanhydrid zusammen mit 121,8 g der in Beispiel 5 hergestellten DT-Zyklen (D/ T-Verhältnis nach ²⁹Si-NMR-Spektrum = 6,44 : 1, M = 544,71 g/ mol und einem Anteil von SiOH/ SiOEt-Gruppierungen von 4,0 Mol-%) und 106,5 g Dekamethylcyclopentasiloxan (D₅) unter Rühren vorgelegt und mit 0,25 g (0,15 ml) Trifluormethansulfonsäure (0,1 Massen-% bezogen auf den Gesamtansatz) versetzt und zügig auf 150°C erhitzt. Die zu Beginn leicht trübe Reaktionsmischung wird unter weiterem Rühren für 6 Stunden bei dieser Temperatur belassen.

Nach Erkalten des Ansatzes wird eine farblos-klare, leichtbewegliche Flüssigkeit isoliert, deren ²⁹Si-NMR-Spektrum die Präsenz von Si-Acetoxygruppen in einer Ausbeute von ca. 80 % bezogen auf eingesetztes Essigsäureanhydrid sowie das vollständige Verschwinden spektroskopisch erfassbarer Anteile an Si-Alkoxy- und SiOH- Gruppen belegt. Etwa 0,7 ml der Flüssigkeit werden mit Hilfe einer Pipette auf einen schwarzen Bakelitdeckel aufgetragen. In weniger als 1 Minute bildet sich ein festes, weißes Gel ohne flüssige Anteile, das sich gut vor dem Hintergrund des Deckels abhebt und die vollständige Äquilibrierung des Acetoxysiloxans belegt.

### Beispiel 8 (erfindungsgemäßer Schritt 3)

### Lösemittelfreie Herstellung eines verzweigten, SiOC-verknüpften Polyethersiloxans mit früher Neutralisation

In einem 500-ml-Vierhalskolben mit KPG-Rührer, Innenthermometer und aufgesetztem Rückflusskühler werden 76,1 g eines Butanol-gestarteten Polyetherols (Propylenoxid-Anteil von 100%) mit einer Molmasse von 1935 g/ mol (Molmasse bestimmt nach OH-Zahl) unter Rühren vorgelegt, mit 0,4 g Triisopropanolamin versetzt und dann lässt man das Amin ca. 30 Minuten einrühren. 20 g des in Beispiel 7 hergestellten, verzweigten trifluormethansulfonsauren Acetoxysiloxans werden hinzugegeben und der Ansatz wird für 1 Stunde unter Rühren auf 50°C erwärmt.

Dann wird der Rückflusskühler durch eine Destillationsbrücke mit Vorlage ersetzt und unter Anlegen eines Hilfsvakuums von ≤ 1 mbar (Ölpumpe) wird bei einer Sumpftemperatur von 100°C im Laufe von 3 Stunden Essigsäure abdestilliert. Nach Abkühlen auf 25°C wird der Destillationssumpf mit 1,9 g NaHCO₃ versetzt. Man lässt das Hydrogencarbonat 30 Minuten einrühren und trennt dann die Salze mit Hilfe einer Filterpresse über eine Seitz K 300 Filterscheibe ab.

Erhalten wird eine hell-gelblich-klare, leichtbewegliche Flüssigkeit, deren zugehöriges ²⁹Si-NMR-Spektrum die Struktur des angestrebten, verzweigten, SiOC-verknüpften Polyethersiloxans belegt. Ein ergänzendes ¹³C-NMR-Spektrum zeigt, dass keinerlei Anteile des Polyetherols in acetylierter Form vorliegen.

## Patentansprüche

1. Verfahren zur Herstellung von im Siloxanteil verzweigten, SiOC-verknüpften Polyethersiloxanen ausgehend von Mischungen zyklischverzweigter Siloxane vom D/T-Typ, **dadurch gekennzeichnet, dass** man
in einem ersten Schritt zyklische-verzweigte Siloxane vom D/T-Typ säurekatalysiert mit Acetanhydrid gegebenenfalls in Abmischung mit einfachen Siloxanzyklen zu Acetoxygruppen-tragenden, verzweigten Siloxanen umsetzt und
in einem zweiten Schritt die Äquilibrierung des Acetoxy-modifizierten verzweigten Siloxans mit Trifluormethansulfonsäure durchführt und
in einem dritten Schritt das trifluormethansulfonsaure Acetoxysiloxan gegebenenfalls in Gegenwart von Basen und gegebenenfalls in Gegenwart eines inerten Lösungsmittels mit Polyetherolen umsetzt.

2. Verfahren nach Anspruch 1, wobei die Mischungen zyklischer-verzweigter Siloxane vom D/T-Typ ausschließlich aus D- und T-Einheiten aufweisenden Siloxanen bestehen mit der Maßgabe, dass der mit ²⁹Si-NMR-Spektroskopie bestimmbare summarische Anteil der in der Siloxanmatrix vorhandenen D- und T-Einheiten, die Si-Alkoxy- und/oder SiOH-Gruppen aufweisen, kleiner als 2 Molprozent, bevorzugt kleiner als 1 Molprozent ist, und dass sie des Weiteren zumindest 5 Gew.-% Siloxancyclen, wie vorzugsweise Oktamethylcyclotetrasiloxan (D₄), Dekamethylcyclopentasiloxan (D₅) und/oder deren Mischungen enthalten.

3. Verfahren nach Anspruch 1, wobei die Mischungen zyklischer-verzweigter Siloxane vom D/T-Typ ausschließlich aus D- und T-Einheiten aufweisenden Siloxanen bestehen mit der Maßgabe, dass der mit ²⁹Si-NMR-Spektroskopie bestimmbare summarische Anteil der in der Siloxanmatrix vorhandenen D- und T-Einheiten, die Si-Alkoxy- und/oder SiOH-Gruppen aufweisen, größer als 2 Molprozent und kleiner als 10 Molprozent ist.

4. Verfahren nach einem der Ansprüche 1 bis 3, wobei die im Acetylierungsschritt gegebenenfalls noch hinzugefügten, einfachen Siloxanzyklen insbesondere Oktamethylcyclotetrasiloxan, Dekamethylcyclopentasiloxan, Dodekamethylcyclohexasiloxan und/ oder deren beliebig zusammengesetzte Abmischungen umfassen.

5. Verfahren nach Anspruch 1 bis 4, wobei der Austausch der Siloxan gebundenen Acetoxygruppen mindestens in Gegenwart einer Base, insbesondere in Gegenwart von Natriumhydrogencarbonat, Ammoniak oder eines organischen Amins erfolgt.

6. Verfahren nach Anspruch 1 bis 5, wobei der Austausch der Siloxan gebundenen Acetoxygruppen durch die Umsetzung mit Polyetherolen unter Verwendung eines inerten Lösungsmittels, bevorzugt unter Verwendung eines inerten und zugleich mit entstehender Essigsäure Azeotrop bildenden Lösungsmittels erfolgt.

7. Verfahren nach Anspruch 1 bis 6, wobei das inerte Lösungsmittel ein aromatisches, bevorzugt alkylaromatisches Lösungsmittel und ganz besonders bevorzugt Toluol ist.

8. Verfahren nach Anspruch 1 bis 5, wobei der Austausch der Siloxan gebundenen Acetoxygruppen durch die Umsetzung mit Polyetherolen lösemittelfrei erfolgt.

9. Verfahren nach Anspruch 1 bis 8, wobei wasserfreies Eisen(III)chlorid, säurebehandelte Bleicherden, konzentrierte Schwefelsäure oder besonders bevorzugt Trifluormethansulfonsäure als Katalysator im Acetylierungsschritt eingesetzt werden.

10. Verfahren nach Anspruch 1 bis 9, wobei als Polyetherole vorzugsweise solche der Formel (I)
A[-O-(CH₂-CHR'-O-)ₘ-(CH₂-CH₂-O-)ₙ--(CH₂-CH(CH₃)-O-)ₒ-Z]ₐ (I)
mit
A entweder Wasserstoff oder ein mindestens ein Kohlenstoffatom aufweisender gesättigter oder ungesättigter organischer Rest, bevorzugt ein mindestens ein Kohlenstoffatom aufweisender organischer Rest einer organischen Startverbindung zur Bereitung der Verbindung, besonders bevorzugt eine Methyl-, Ethyl-, Propyl-, Butyl-, Vinyl- oder Allylgruppe ist,
R' unabhängig voneinander eine gesättigte Alkylgruppe mit 2-18 C-Atomen ist oder ein aromatischer Rest, respektive bevorzugt eine Ethylgruppe oder ein Phenylrest,
Z entweder Wasserstoff, ein linearer oder verzweigter, gesättigter oder ungesättigter Kohlenwasserstoffrest mit 1-18 C-Atomen, bevorzugt eine Methyl-, Ethyl-, Propyl-, Butyl-, Vinyl- oder Allylgruppe ist, oder
der Rest einer organischen Säure der Formel -C(=O)-ZE, wobei ZE ein organischer Rest, bevorzugt ein linearer oder verzweigter, gesättigter oder olefinisch ungesättigter Kohlenwasserstoffrest mit 1 bis 17 C-Atomen, bevorzugt eine Methylgruppe ist, oder ein aromatischer Kohlenwasserstoffrest mit 6 bis 20 C-Atomen, bevorzugt ein Phenylrest ist, oder
der Rest der Formel -C(=O)-O-ZC ist, wobei ZC ein organischer Rest, bevorzugt ein linearer oder verzweigter, gesättigter oder olefinisch ungesättigter Kohlenwasserstoffrest mit 1 bis 18 C-Atomen, bevorzugt eine Methyl-, Ethylgruppe ist, oder ein aromatischer Kohlenwasserstoffrest mit 6 bis 20 C-Atomen, bevorzugt ein Phenylrest, m gleich 0 bis zu 50, bevorzugt 0 bis zu 30, besonders bevorzugt 0 bis zu 20 ist
n gleich 0 bis zu 250, bevorzugt 3 bis zu 220, besonders bevorzugt 5 bis zu 200 ist
o gleich 0 bis zu 250, bevorzugt 3 bis zu 220, besonders bevorzugt 5 bis zu 200 ist
a gleich 1 bis zu 8, bevorzugt größer 1 bis zu 6, besonders bevorzugt 1, 2, 3 oder 4,
mit der Maßgabe, dass die Summe aus m, n und o gleich oder größer als 1 ist und mit der Maßgabe , dass mindestens A oder Z Wasserstoff repräsentieren,
eingesetzt werden.

11. Verfahren nach Anspruch 1 bis 10, wobei man mindestens 1 Mol an Polyether gebundene OH-Funktionalität pro Mol Acetoxygruppe des verzweigten Siloxans, bevorzugt 1 bis 2 Mol an Polyether gebundene OH-Funktionalität, bevorzugt 1,1 bis 1,6 Mol an Polyether gebundene OH-Funktionalität, besonders bevorzugt 1,2 bis 1,4 Mol an Polyether gebundene OH-Funktionalität pro Mol Acetoxygruppe des verzweigten Siloxans einsetzt.

12. Zubereitung hergestellt nach Anspruch 1 enthaltend wenigstens einen SiOC-verknüpften, verzweigten Siliconpolyether, ein Polyetherol und einen mit einer Acetylgruppe endverschlossenen Polyether, mit der Maßgabe, dass der im Siliconpolyether enthaltene Polyetherrest chemisch identisch ist mit dem Polyetherrest des Polyetherols und mit dem Polyetherrest des mit einer Acetylgruppe endverschlossenen Polyethers und dass der Anteil des SiOC-verknüpften, verzweigten Siliconpolyethers mindestens 50 Massenprozent bezogen auf die Gesamtzubereitung beträgt.

13. Verwendung der Zubereitung nach Anspruch 12 als Entschäumer, als Schaumstabilisator, Netzmittel, Lack- und Verlaufsadditiv oder als Dismulgator.

## Claims

1. Process for producing SiOC-bonded polyether siloxanes branched in the siloxane portion from mixtures of cyclic branched siloxanes of the D/T type, **characterized in that** it comprises
in a first step reacting cyclic branched siloxanes of the D/T type with acetic anhydride optionally in admixture with simple siloxane cycles under acid catalysis to afford acetoxy-bearing branched siloxanes and
in a second step performing the equilibration of the acetoxy-modified branched siloxane with trifluoromethanesulfonic acid and
in a third step reacting the trifluoromethanesulfonic acid-treated acetoxysiloxane with polyetherols optionally in the presence of bases and optionally in the presence of an inert solvent.

2. Process according to Claim 1, wherein the mixtures of cyclic branched siloxanes of the D/T type consist exclusively of siloxanes comprising D and T units with the proviso that the ²⁹Si NMR spectroscopy-determinable cumulative proportion of D and T units comprising Si-alkoxy and/or SiOH groups present in the siloxane matrix, is less than 2 mole per cent, preferably less than 1 mole per cent, and that they further contain at least 5% by weight of siloxane cycles, such as preferably octamethylcyclotetrasiloxane (D₄), decamethylcyclopentasiloxane (D₅) and/or mixtures thereof.

3. Process according to Claim 1, wherein the mixtures of cyclic branched siloxanes of the D/T type consist exclusively of siloxanes comprising D and T units with the proviso that the ²⁹Si NMR spectroscopy-determinable cumulative proportion of D and T units comprising Si-alkoxy and/or SiOH groups present in the siloxane matrix is greater than 2 mole per cent and less than 10 mole per cent.

4. Process according to any of Claims 1 to 3, wherein the simple siloxane cycles optionally also added in the acetylation step comprise in particular octamethylcyclotetrasiloxane, decamethylcyclopentasiloxane, dodecamethylcyclohexasiloxane and/or admixtures thereof having any desired composition.

5. Process according to Claim 1 to 4, wherein the replacement of the siloxane-bonded acetoxy groups is effected at least in the presence of a base, in particular in the presence of sodium hydrogencarbonate, ammonia or an organic amine.

6. Process according to Claim 1 to 5, wherein the replacement of the siloxane-bonded acetoxy groups is effected via the reaction with polyetherols using an inert solvent, preferably using an inert solvent which also forms an azeotrope with acetic acid formed.

7. Process according to Claim 1 to 6, wherein the inert solvent is an aromatic, preferably alkylaromatic, solvent and very particularly preferably toluene.

8. Process according to Claim 1 to 5, wherein the replacement of the siloxane-bonded acetoxy groups is effected solventlessly via the reaction with polyetherols.

9. Process according to Claim 1 to 8, wherein anhydrous iron (III) chloride, acid-treated fuller's earths, concentrated sulfuric acid or particularly preferably trifluoromethanesulfonic acid are employed as catalyst in the acetylation step.

10. Process according to Claim 1 to 9, wherein the polyetherols employed are preferably those of formula (I)
A[-O-(CH₂-CHR'-O-)ₘ-(CH₂-CH₂-O-)ₙ--(CH₂-CH(CH₃)-O-)ₒ-Z]ₐ (I)
where
A is either hydrogen or an at least one carbon atom-comprising saturated or unsaturated organic radical, preferably an at least one carbon atom-comprising organic radical of an organic starter compound for preparing the compound, more preferably a methyl, ethyl, propyl, butyl, vinyl or allyl group,
R' is independently at each occurrence a saturated alkyl group comprising 2-18 carbon atoms or an aromatic radical, preferably an ethyl group or a phenyl radical respectively,
Z is either hydrogen, a linear or branched, saturated or unsaturated hydrocarbon radical comprising 1-18 carbon atoms, preferably a methyl, ethyl, propyl, butyl, vinyl or allyl group, or
the radical of an organic acid of formula -C(=O)-ZE, wherein ZE is an organic radical, preferably a linear or branched, saturated or olefinically unsaturated hydrocarbon radical comprising 1 to 17 carbon atoms, preferably a methyl group, or an aromatic hydrocarbon radical comprising 6 to 20 carbon atoms, preferably a phenyl radical, or
the radical of formula -C(=O)-O-ZC, wherein ZC is an organic radical, preferably a linear or branched, saturated or olefinically unsaturated hydrocarbon radical comprising 1 to 18 carbon atoms, preferably a methyl group, ethyl group, or an aromatic hydrocarbon radical comprising 6 to 20 carbon atoms, preferably a phenyl radical,
m equals from 0 to 50, preferably from 0 to 30, particularly preferably from 0 to 20,
n equals from 0 to 250, preferably from 3 to 220, particularly preferably from 5 to 200,
o equals from 0 to 250, preferably from 3 to 220, particularly preferably from 5 to 200,
a equals from 1 to 8, preferably from greater than 1 to 6, particularly preferably 1, 2, 3 or 4,
with the proviso that the sum of m, n and o is equal to or greater than 1 and with the proviso that at least A or Z represent hydrogen.

11. Process according to Claim 1 to 10, wherein at least 1 mole of polyether-bonded OH functionality is employed per mole of acetoxy group of the branched siloxane, preferably 1 to 2 mol of polyether-bonded OH functionality, preferably 1.1 to 1.6 mol of polyether-bonded OH functionality, particularly preferably 1.2 to 1.4 mol of polyether-bonded OH functionality, per mole of acetoxy group of the branched siloxane.

12. Preparation produced according to Claim 1 containing at least one SiOC-bonded branched silicone polyether, a polyetherol and an acetyl-endcapped polyether with the proviso that the polyether radical present in the silicone polyether is chemically identical to the polyether radical of the polyetherol and to the polyether radical of the acetyl-endcapped polyether and that the proportion of the SiOC-bonded branched silicone polyether is at least 50 mass per cent based on the overall preparation.

13. Use of the preparation according to Claim 12 as a defoamer, as a foam stabilizer, wetting agent, paint and flow additive or as a demulsifier.

## Revendications

1. Procédé pour la préparation de polyéthersiloxanes liés par SiOC, ramifiés dans la partie siloxane, partant de mélanges de siloxanes cycliques-ramifiés du type D/T, **caractérisé en ce que**,
- dans une première étape, on transforme des siloxanes cycliques-ramifiés du type D/T sous catalyse acide avec de l'anhydride acétique, le cas échéant en mélange avec des cycles de siloxane simples en siloxanes ramifiés portant des groupes acétoxy et
- dans une deuxième étape, on réalise l'équilibrage du siloxane ramifié modifié par acétoxy avec de l'acide trifluorométhanesulfonique et
- dans une troisième étape, on transforme l'acétoxysiloxane de l'acide trifluorométhanesulfonique le cas échéant en présence de bases et le cas échéant en présence d'un solvant inerte avec des polyétherols.

2. Procédé selon la revendication 1, les mélanges de siloxanes cycliques-ramifiés du type D/T étant constitués exclusivement de siloxanes présentant des motifs D et T, sous réserve que la proportion sous forme de somme, déterminée par spectroscopie ²⁹Si-RMN, des motifs D et T présents dans la matrice de siloxane, qui présentent des groupes Si-alcoxy et/ou SiOH, soit inférieure à 2% en mole, de préférence inférieure à 1% en mole et qu'ils contiennent en outre au moins 5% en poids de cycles siloxane, tels que de préférence l'octaméthylcyclotétrasiloxane (D₄), le décaméthylcyclopentasiloxane (D₅) et/ou leurs mélanges.

3. Procédé selon la revendication 1, les mélanges de siloxanes cycliques-ramifiés du type D/T étant constitués exclusivement de siloxanes présentant des motifs D et T, sous réserve que la proportion sous forme de somme, déterminée par spectroscopie ²⁹Si-RMN, des motifs D et T présents dans la matrice de siloxane, qui présentent des groupes Si-alcoxy et/ou SiOH, soit supérieure à 2% en mole et inférieure à 10% en mole.

4. Procédé selon l'une quelconque des revendications 1 à 3, les cycles simples de siloxane le cas échéant encore ajoutés dans l'étape d'acétylation comprenant en particulier de l'octaméthylcyclotétrasiloxane, du décaméthylcyclopentasiloxane, du dodécaméthylcyclohexasiloxane et/ou leurs mélanges de composition quelconque.

5. Procédé selon la revendication 1 à 4, le remplacement des groupes acétoxy liés au siloxane ayant lieu au moins en présence d'une base, en particulier en présence d'hydrogénocarbonate de sodium, d'ammoniaque ou d'une amine organique.

6. Procédé selon la revendication 1 à 5, le remplacement des groupes acétoxy liés au siloxane ayant lieu par transformation avec des polyétherols avec utilisation d'un solvant inerte, de préférence avec utilisation d'un solvant inerte et formant simultanément un azéotrope avec l'acide acétique qui se forme.

7. Procédé selon la revendication 1 à 6, le solvant inerte étant un solvant aromatique, de préférence alkylaromatique et de manière tout particulièrement préférée le toluène.

8. Procédé selon la revendication 1 à 5, le remplacement des groupes acétoxy liés au siloxane par transformation avec des polyétherols ayant lieu sans solvant.

9. Procédé selon la revendication 1 à 8, du chlorure de fer (III) anhydre, des terres de blanchiment traitées à l'acide, de l'acide sulfurique concentré ou de manière particulièrement préférée de l'acide trifluorométhanesulfonique étant utilisé(s) comme catalyseur dans l'étape d'acétylation.

10. Procédé selon la revendication 1 à 9, les polyétherols utilisés étant de préférence ceux de formule (I)
A[-O-(CH₂-CHR'-O-)ₘ-(CH₂-CH₂-O-)ₙ--(CH₂-CH(CH₃)-O-)ₒ-Z]ₐ (I)
dans laquelle
A représente soit hydrogène, soit un radical organique saturé ou insaturé, présentant au moins un atome de carbone, de préférence un radical organique présentant au moins un atome de carbone d'un composé initial organique pour la préparation du composé, de manière particulièrement préférée un groupe méthyle, éthyle, propyle, butyle, vinyle ou allyle,
les radicaux R' représentent, indépendamment les uns des autres, un groupe alkyle saturé comprenant 2-18 atomes de carbone ou un radical aromatique, respectivement de préférence un groupe éthyle ou un radical phényle,
Z représente soit hydrogène, un radical hydrocarboné linéaire ou ramifié, saturé ou insaturé comprenant 1-18 atomes de carbone, de préférence un groupe méthyle, éthyle, propyle, butyle, vinyle ou allyle, soit le radical d'un acide organique de formule -C(=O)-ZE, ZE représentant un radical organique, de préférence un radical hydrocarboné linéaire ou ramifié, saturé ou oléfiniquement insaturé comprenant 1 à 17 atomes de carbone, de préférence un groupe méthyle, ou un radical hydrocarboné aromatique comprenant 6 à 20 atomes de carbone, de préférence un radical phényle, soit le radical de formule -C(=O)-O-ZC, ZC représentant un radical organique, de préférence un radical hydrocarboné linéaire ou ramifié, saturé ou oléfiniquement insaturé comprenant 1 à 18 atomes de carbone, de préférence un groupe méthyle, éthyle, ou un radical hydrocarboné aromatique comprenant 6 à 20 atomes de carbone, de préférence un radical phényle,
m vaut 0 jusqu'à 50, de préférence 0 jusqu'à 30, de manière particulièrement préférée 0 jusqu'à 20
n vaut 0 jusqu'à 250, de préférence 3 jusqu'à 220, de manière particulièrement préférée 5 jusqu'à 200
o vaut 0 jusqu'à 250, de préférence 3 jusqu'à 220, de manière particulièrement préférée 5 jusqu'à 200
a vaut 1 jusqu'à 8, de préférence supérieur à 1 jusqu'à 6, de manière particulièrement préférée 1, 2, 3 ou 4,
sous réserve que la somme de m, n et o soit supérieure ou égale à 1 et sous réserve qu'au moins A ou Z représente hydrogène.

11. Procédé selon la revendication 1 à 10, au moins 1 mole de fonctionnalité OH liée au polyéther par mole de groupe acétoxy du siloxane ramifié, de préférence 1 à 2 moles de fonctionnalité OH liée au polyéther, de manière particulièrement préférée 1,1 à 1,6 mole de fonctionnalité OH liée au polyéther, de manière particulièrement préférée 1,2 à 1,4 mole de fonctionnalité OH liée au polyéther par mole de groupe acétoxy du siloxane ramifié étant utilisée(s).

12. Préparation préparée selon la revendication 1, contenant au moins un polyéther de silicone ramifié, lié par SiOC, un polyétherol et un polyéther terminé par un groupe acétyle, sous réserve que le radical polyéther contenu dans le polyéther de silicone soit chimiquement identique au radical polyéther du polyétherol et au radical polyéther du polyéther terminé par un groupe acétyle et que la proportion du polyéther de silicone ramifié, lié par SiOC représente au moins 50% en masse par rapport à la préparation totale.

13. Utilisation de la préparation selon la revendication 12 comme antimousse, stabilisant de mousse, agent mouillant, additif de laque et promoteur d'écoulement ou désémulsifiant.
